# EUROPEAN PATENT APPLICATION

(11) **EP 4 316 971 A1**
(43) Date of publication of application: **07.02.2024**
(21) Application number: 22780590.0
(22) Date of filing: 25.03.2022
(51) Int. Cl.: B63B 25/08, B63H 21/38, B63J 3/04, F02B 43/10, F02M 21/02, F02M 37/00

(54) **WATERCRAFT**

(30) Priority: 31.03.2021 JP 2021060215
(71) Applicant: Mitsubishi Shipbuilding Co., Ltd., Yokohama-shi Kanagawa 220-8401 (JP)
(72) Inventor: MORIMOTO Shinsuke, Yokohama-shi, Kanagawa 220-8401 (JP); YAMADA Daisuke, Yokohama-shi, Kanagawa 220-8401 (JP); UNSEKI Takashi, Yokohama-shi, Kanagawa 220-8401 (JP)
(74) Representative: Studio Torta S.p.A.
(86) International application number: PCT/JP2022/014492
(87) International publication number: WO 2022/210377

(57) **Abstract**

A watercraft comprising: a watercraft body; an ammonia tank that is provided to the watercraft body and stores fuel ammonia in a liquid state; a fuel supply line that is connected to the ammonia tank; a combustion device into which the fuel ammonia is introduced from the ammonia tank through the fuel supply line; an inert gas line that pumps inert gas into at least the combustion device through the fuel supply line; a high-pressure storage tank into which the inert gas pumped into the combustion device and the fuel ammonia in the combustion device are introduced, and which is capable of storing the fuel ammonia in a high-pressure state for allowing the fuel ammonia to be maintained in a liquid state; and an ammonia-filling line that is capable of introducing the fuel ammonia stored in the high-pressure storage tank into the fuel supply line.

## Description

### Technical Field

The present disclosure relates to a watercraft.

Priority is claimed on Japanese Patent Application No. 2021-060215 filed on March 31, 2021, the content of which is incorporated herein by reference.

### Background Art

PTL 1 describes a power device that generates mechanical power by combusting high-temperature hydrogen-rich ammonia and combustion air.

### Citation List

### Patent Literature

[PTL 1] Japanese Patent No. 5315493

### Summary of Invention

### Technical Problem

In the device as described in PTL 1, for example, when the operation is stopped for inspection, it is necessary to purge ammonia remaining inside an internal combustion engine or in a fuel flow path using an inert gas. For example, after being collected as ammonia water by an ammonia collection device, the purged and exhausted ammonia is neutralized or diluted to be exhausted to the outside of a watercraft. For this reason, there is a problem in which a purged fuel is wasted.

The present disclosure is devised in order to solve the problem, and an object thereof is to provide a watercraft that can suppress fuel consumption by effectively using purged ammonia.

### Solution to Problem

According to an aspect of the present disclosure, there is provided a watercraft including a hull, an ammonia tank that is provided at the hull and that stores fuel ammonia in a liquid state, a fuel supply line that is connected to the ammonia tank, a combustion device into which the fuel ammonia is introduced from the ammonia tank via the fuel supply line, an inert gas supply device that pumps an inert gas to at least the combustion device via the fuel supply line, a high-pressure storage tank into which the fuel ammonia in the combustion device is introduced together with the inert gas pumped to the combustion device and that is capable of storing the fuel ammonia in a high-pressure state where the fuel ammonia is capable of maintaining the liquid state, and an ammonia filling line through which the fuel ammonia stored in the high-pressure storage tank is capable of being introduced into the fuel supply line.

### Advantageous Effects of Invention

With the watercraft of the aspect, fuel consumption can be suppressed by effectively using purged ammonia. Brief Description of Drawings

Fig. 1 is a side view of a watercraft according to a first embodiment of the present disclosure.
Fig. 2 is a view showing a pipe system according to the first embodiment of the present disclosure and shows a state during driving of a combustion device.
Fig. 3 is a view showing the pipe system according to the first embodiment of the present disclosure and shows a state during purging.
Fig. 4 is a view showing the pipe system according to the first embodiment of the present disclosure and shows a state before ammonia filling.
Fig. 5 is a view showing the pipe system according to the first embodiment of the present disclosure and shows a state during ammonia filling.
Fig. 6 is a view showing a pipe system according to a modification example of the first embodiment of the present disclosure and shows a state when purging an inert gas containing a small amount of remaining fuel ammonia.
Fig. 7 is a view showing a pipe system according to a second embodiment of the present disclosure.
Fig. 8 is a view showing a pipe system according to a modification example of the second embodiment of the present disclosure.
Fig. 9 is a view showing a pipe system according to a third embodiment of the present disclosure.

### Description of Embodiments

### <First Embodiment>

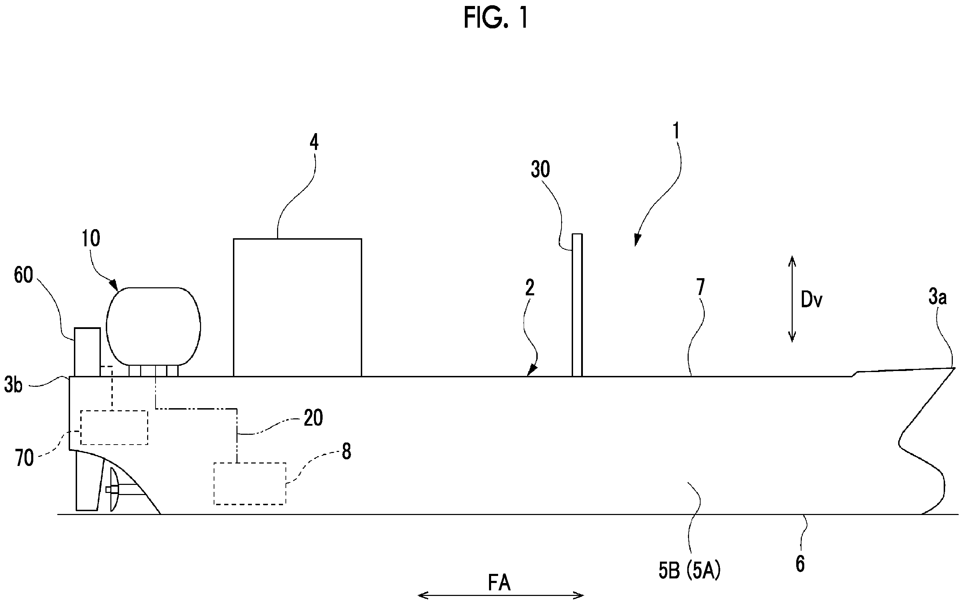

Hereinafter, a watercraft according to a first embodiment of the present disclosure will be described with reference to the drawings. Fig. 1 is a side view of the watercraft according to the first embodiment of the present disclosure.

### (Configuration of Watercraft)

As shown in Fig. 1, a watercraft 1 of the first embodiment includes a hull 2, a superstructure 4, a combustion device 8, an ammonia tank 10, a pipe system 20, a vent post 30, an ammonia collecting unit 60, and a collected ammonia water tank 70. The watercraft type of the watercraft 1 is not limited to a specific type. A liquefied gas carrier, a ferry, a RORO ship, a car carrier, a passenger ship, or the like can be given as examples of the watercraft type of the watercraft 1.

The hull 2 has a pair of broadsides 5A and 5B and a bottom 6 that form an outer shell thereof. The broadsides 5A and 5B include a pair of broadside skins forming the left and right broadsides respectively. The bottom 6 includes a bottom skin that connects the broadsides 5A and 5B to each other. A cross section of the outer shell of the hull 2 which is orthogonal to a bow-stern direction FA is formed in a U-shape by the pair of broadsides 5A and 5B and the bottom 6.

The hull 2 further includes an upper deck 7 that is a through deck which is disposed in an uppermost layer. The superstructure 4 is formed on the upper deck 7. An accommodation space or the like is provided in the superstructure 4. In the watercraft 1 of the first embodiment, for example, a cargo space (not shown) for loading cargo is provided on a bow 3a side of the superstructure 4 in the bow-stern direction FA.

The combustion device 8 is a device that generates heat energy by combusting a fuel and is provided in the hull 2. The combustion device 8 of the first embodiment is an internal combustion engine used as a main engine for propulsion of the watercraft 1. In addition, the combustion device 8 uses ammonia (hereinafter, referred to as fuel ammonia) as a fuel. The combustion device 8 is not limited to the internal combustion engine used as the main engine for propulsion of the watercraft 1, and an internal combustion engine used in a generator that supplies electricity into a watercraft or the like, a boiler that generates steam which is a working fluid, and the like can be given as examples.

The ammonia tank 10 stores liquefied ammonia as fuel ammonia. The ammonia tank 10 given as an example in the first embodiment is provided on the upper deck 7 on a stern 3b side of the superstructure 4, but the disposition of the ammonia tank 10 is not limited to being on the upper deck 7 on the stern 3b side of the superstructure 4.

The vent post 30 guides, for example, a gas, such as a vent gas exhausted from a cargo tank, upward above the upper deck 7 to be released into the atmosphere. The vent post 30 of the first embodiment is provided on the upper deck 7 and extends upward from the upper deck 7. The vent post 30 has a tubular shape extending in an up-down direction Dv and has an upper portion that is open.

The ammonia collecting unit 60 causes water W to absorb ammonia that is a collection target and collects the ammonia as collected ammonia water. The ammonia collecting unit 60 of the first embodiment is disposed on the upper deck 7 on the stern 3b side of the ammonia tank 10. For example, a so-called scrubber that causes water to absorb ammonia by jetting water to a gas containing ammonia can be used as the ammonia collecting unit 60. Water (for example, fresh water) stored in a water tank (not shown) provided in the hull 2 is supplied to the ammonia collecting unit 60. The ammonia collecting unit 60 may be configured to cause water to absorb ammonia and to collect the ammonia as collected ammonia water and is not limited to the configuration or the disposition.

The collected ammonia water tank 70 stores collected ammonia water that is collected by the ammonia collecting unit 60. The collected ammonia water tank 70 in the first embodiment is disposed in the hull 2 below the upper deck 7 on which the ammonia collecting unit 60 is provided.

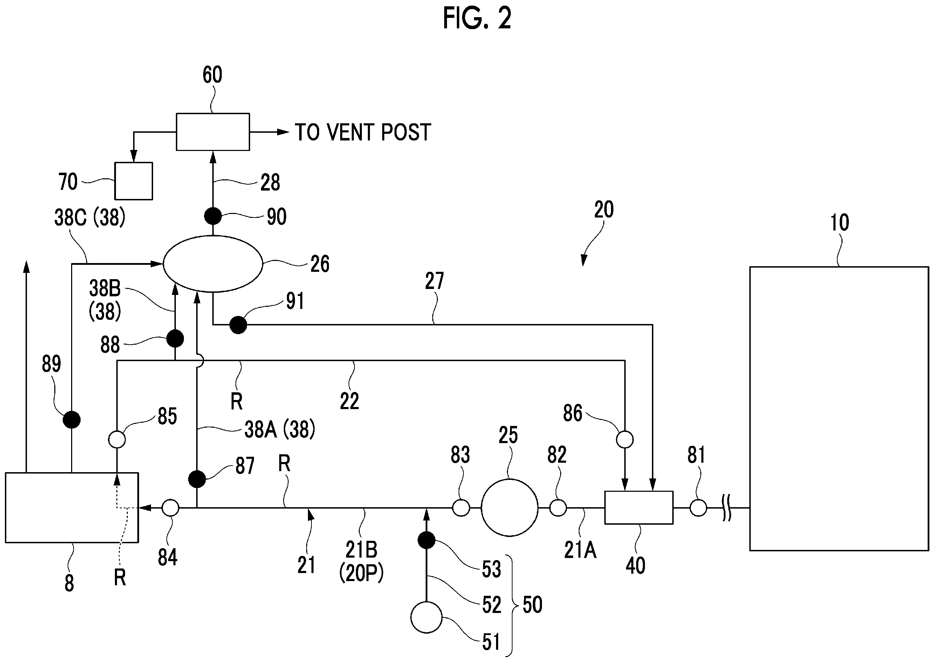

Fig. 2 is a view showing the pipe system 20 according to the first embodiment of the present disclosure in which ammonia circulates.

As shown in Fig. 2, in addition to the configurations, the watercraft 1 of the first embodiment further includes a fuel supply line 21, an ammonia high-pressure pump 25, an ammonia fuel return line 22, an inert gas supply device 50, a vent line 38, a high-pressure storage tank 26, and an ammonia filling line 27. In addition, the watercraft 1 of the first embodiment further includes an ammonia storing tank 40.

The fuel supply line 21 is connected to the ammonia tank 10 and forms a flow path through which fuel ammonia stored in the ammonia tank 10 is suppliable to the combustion device 8. The fuel supply line 21 in the first embodiment includes a first supply line 21A and a second supply line 21B. The first supply line 21A connects the ammonia tank 10 and the ammonia high-pressure pump 25 to each other. The second supply line 21B connects the ammonia high-pressure pump 25 and the combustion device 8 to each other.

The ammonia storing tank 40 is provided in the middle of the first supply line 21A in the first embodiment. The ammonia fuel return line 22 and the ammonia filling line 27 are connected to the ammonia storing tank 40. The ammonia storing tank 40 is configured to temporarily store fuel ammonia flowing in from the ammonia tank 10, liquid fuel ammonia flowing in from the ammonia fuel return line 22, and liquid fuel ammonia flowing in from the ammonia filling line 27. For example, the ammonia tank 10 is disposed above the ammonia storing tank 40, and the fuel ammonia of the ammonia tank 10 can be flowed into the ammonia storing tank 40 by a weight thereof. The first supply line 21A is provided with a plurality of opening-closing valves 81 and 82. The opening-closing valves 81 and 82 are provided at a position of an inlet of the ammonia storing tank 40 and a position of an inlet of the ammonia high-pressure pump 25 respectively.

The ammonia high-pressure pump 25 pressurizes fuel ammonia supplied from the ammonia storing tank 40 to the combustion device 8. The fuel ammonia pressurized by the ammonia high-pressure pump 25 is supplied to the combustion device 8 via the second supply line 21B. The second supply line 21B is provided with a plurality of opening-closing valves 83 and 84. The plurality of opening-closing valves 83 and 84 are provided at both end portions of the second supply line 21B, that is, a position of an outlet of the ammonia high-pressure pump 25 and a position of an inlet of the combustion device 8. Although not shown in Fig. 2, an ammonia heater that heats the fuel ammonia pressurized by the ammonia high-pressure pump 25 is provided between the ammonia high-pressure pump 25 and the combustion device 8.

Surplus fuel ammonia left unused as a fuel by the combustion device 8 is returned to the fuel supply line 21 on an ammonia tank 10 side of the ammonia high-pressure pump 25 through the ammonia fuel return line 22. The surplus fuel ammonia is returned to the ammonia storing tank 40 provided at the first supply line 21A through the ammonia fuel return line 22 in the first embodiment. The ammonia fuel return line 22 is provided with a plurality of opening-closing valves 85 and 86. The opening-closing valves 85 and 86 are provided at both end portions of the ammonia fuel return line 22, that is, a position of an outlet of the combustion device 8 and a position of the inlet of the ammonia storing tank 40 respectively.

The inert gas supply device 50 performs so-called purging that is replacing fuel ammonia of a circulation passage R, in which fuel ammonia which is a fuel of the combustion device 8 circulates, with an inert gas such as nitrogen. The inert gas supply device 50 includes an inert gas supply unit 51, an inert gas supply line 52, and an inert gas supply valve 53. For example, an inert gas generated inside the hull 2 by an inert gas generation device (not shown) or an inert gas stored in advance in an inert gas tank (not shown) provided at the hull 2 can be used as an inert gas. The inert gas may be a gas that does not chemically react when in contact with fuel ammonia.

The inert gas supply unit 51 supplies an inert gas to the inert gas supply line 52.

The inert gas supply line 52 connects the inert gas supply unit 51 and the circulation passage R to each other. More specifically, the inert gas supply line 52 connects the inert gas supply unit 51 and a purging target region 20p of the circulation passage R to each other. The purging target region 20p in the first embodiment is the circulation passage R formed in the fuel supply line 21 on a combustion device 8 side of the opening-closing valve 83, the ammonia fuel return line 22 on the combustion device 8 side of the opening-closing valve 86, and the combustion device 8. The inert gas supply line 52 given as an example in the first embodiment is connected to the purging target region 20p of the second supply line 21B in the purging target region 20p.

The inert gas supply valve 53 is provided at the inert gas supply line 52. The inert gas supply valve 53 is brought into a closed state in normal times, and supply of an inert gas from the inert gas supply unit 51 to the purging target region 20p is shut off. Herein, normal times mean a time when fuel ammonia is suppliable to the combustion device 8 such as when the combustion device 8 is operated. In normal times, the opening-closing valve 81 to the opening-closing valve 86 are brought into an open state, fuel ammonia is supplied from the ammonia storing tank 40 to the combustion device 8 through the second supply line 21B, and surplus fuel ammonia is returned from the combustion device 8 to the ammonia storing tank 40.

When the combustion device 8 is stopped for an emergency, for a long period of time, or the like, the inert gas supply valve 53 is changed from a closed state to an open state. In other words, when purging fuel ammonia remaining in the purging target region 20p, the closed state is operated to the open state. When performing such purging, first, the opening-closing valves 83 and 86 are brought into the closed state, and the second supply line 21B and the ammonia fuel return line 22 are shut off. Accordingly, a state where supply of fuel ammonia from the ammonia high-pressure pump 25 to the combustion device 8 is stopped is caused. Next, when the inert gas supply valve 53 is brought into the open state from the closed state, a state where an inert gas is suppliable from the inert gas supply unit 51 to the purging target region 20p is caused accordingly.

The vent line 38 guides an inert gas supplied by the inert gas supply device 50 and fuel ammonia remaining in the circulation passage R to the high-pressure storage tank 26. As the fuel ammonia flows out to the vent line 38 together with the inert gas, the fuel ammonia in the purging target region 20p (circulation passage R) is replaced with the inert gas. In the first embodiment, three vent lines 38 including a first vent line 38A, a second vent line 38B, and a third vent line 38C are provided. The first vent line 38A connects the fuel supply line 21 and the high-pressure storage tank 26 to each other. More specifically, the first vent line 38A connects the second supply line 21B of the fuel supply line 21 and the high-pressure storage tank 26 to each other. The second vent line 38B connects the ammonia fuel return line 22 and the high-pressure storage tank 26 to each other. The third vent line 38C connects the inside of the combustion device 8 and the high-pressure storage tank 26 to each other. The first vent line 38A, the second vent line 38B, and the third vent line 38C are provided with opening-closing valves 87, 88, and 89 respectively.

The high-pressure storage tank 26 is configured to store an inert gas and fuel ammonia in a high-pressure state (for example, 20 barG or higher). The high-pressure storage tank 26 is a high-pressure container that can withstand a higher pressure than a general knockout drum. The fuel ammonia is introduced into the high-pressure storage tank 26 together with the inert gas via the vent line 38. At this time, since the fuel ammonia is pumped using the high-pressure inert gas of the inert gas supply device 50, fuel ammonia remaining in the circulation passage R maintains a liquid state even after being introduced into the high-pressure storage tank 26. A state where a gas phase containing an inert gas and a liquid phase of fuel ammonia are present is caused in the high-pressure storage tank 26. A liquid phase in the high-pressure storage tank 26 communicates with the ammonia filling line 27, and a gas phase in the high-pressure storage tank 26 communicates with a gas exhaust line 28 through which a gas is sent into the ammonia collecting unit 60.

The gas exhaust line 28 is provided with an opening-closing valve 90. While the opening-closing valve 90 is brought into a closed state when fuel ammonia is introduced into the high-pressure storage tank 26 together with an inert gas, the opening-closing valve 90 is brought into an open state when reducing a pressure inside the high-pressure storage tank 26. The liquid phase of the high-pressure storage tank 26 may be provided with another line connected to the ammonia collecting unit 60 via the knockout drum (not shown). In this manner, liquid ammonia left in the high-pressure storage tank 26 is exhausted, and thereby the pressure in the high-pressure storage tank 26 can be reduced.

Fuel ammonia stored in the high-pressure storage tank 26 is introduced into the fuel supply line 21 through the ammonia filling line 27. More specifically, liquid ammonia in the liquid phase of the high-pressure storage tank 26 can be introduced into the fuel supply line 21 through the ammonia filling line 27 using a pressure in the high-pressure storage tank 26. Liquefied ammonia is introduced into the ammonia storing tank 40 provided at the first supply line 21A through the ammonia filling line 27 given as an example in the first embodiment. The ammonia filling line 27 is provided with an opening-closing valve 91 on a side close to the high-pressure storage tank 26. The opening-closing valve 91 is brought into an open state when introducing fuel ammonia from the high-pressure storage tank 26 into the fuel supply line 21 and is brought into a closed state in the other cases.

### (Operation by Pipe System)

Next, a purging treatment and an ammonia filling treatment using the pipe system 20 described above will be described with reference to the drawings. In the drawings, an opening-closing valve in an open state is shown in white, and an opening-closing valve in a closed state is shown in black.

First, in a case where the combustion device 8 is operated using fuel ammonia stored in the ammonia tank 10, as shown in Fig. 2, the opening-closing valves 81, 82, 83, 84, 85, and 86 are brought into an open state, and the opening-closing valves 87, 88, 89, 90, and 91 are brought into a closed state. In addition, the inert gas supply valve 53 is brought into the closed state. Then, from the ammonia tank 10 into the ammonia storing tank 40, fuel ammonia flows and is temporarily stored. Then, when the ammonia high-pressure pump 25 is operated, the fuel ammonia of the ammonia storing tank 40 is drawn into the ammonia high-pressure pump 25 and is sent out to the second supply line 21B with a pressure thereof increased. The fuel ammonia sent out to the second supply line 21B flows into the combustion device 8 and is used as a fuel. Then, surplus fuel ammonia that has flowed into the combustion device 8 but is left unused as a fuel is returned to the ammonia storing tank 40 via the ammonia fuel return line 22. The opening-closing valve 90 may be brought into the open state.

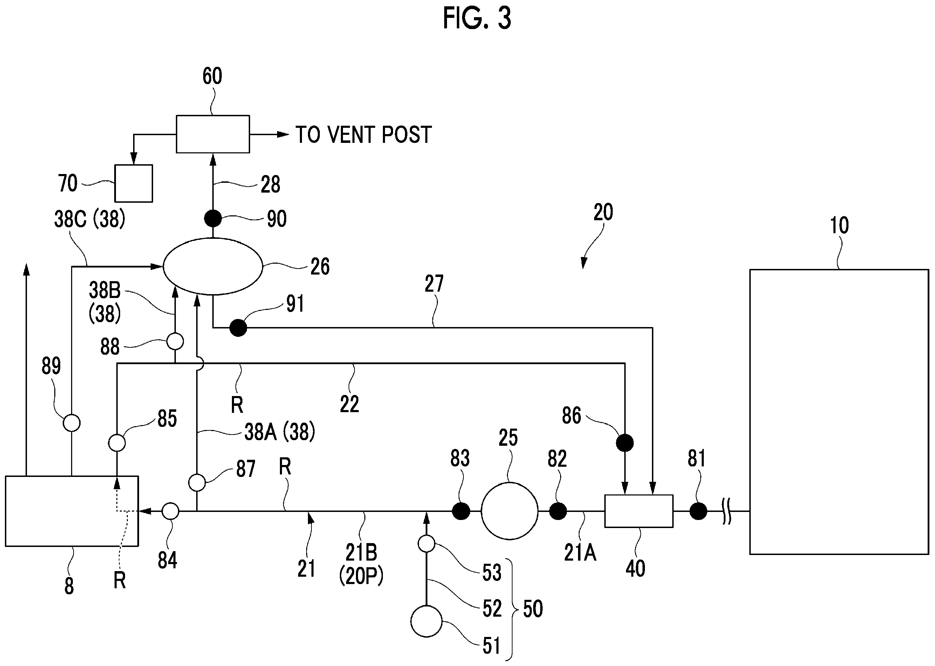

On the other hand, for example, in a case where a fuel used in the combustion device 8 is switched or a case where the combustion device 8 stops using fuel ammonia due to maintenance or the like, as shown in Fig. 3, the opening-closing valves 84, 85, 87, 88, and 89 and the inert gas supply valve 53 are brought into an open state, and the opening-closing valves 81, 82, 83, 86, 90, and 91 are brought into a closed state. Then, the inert gas supply unit 51 is operated. Then, each of fuel ammonia remaining in the second supply line 21B of the fuel supply line 21, fuel ammonia remaining in the ammonia fuel return line 22, and fuel ammonia remaining in the combustion device 8 is purged with a high-pressure inert gas and is introduced into the high-pressure storage tank 26 together with the inert gas. After purging is completed, all of the opening-closing valves 81 to 91 and the inert gas supply valve 53 are brought into the closed state. In addition, since the inert gas supply valve 53 maintains the closed state in the subsequent steps, description of the open and closed states of the inert gas supply valve 53 will be omitted.

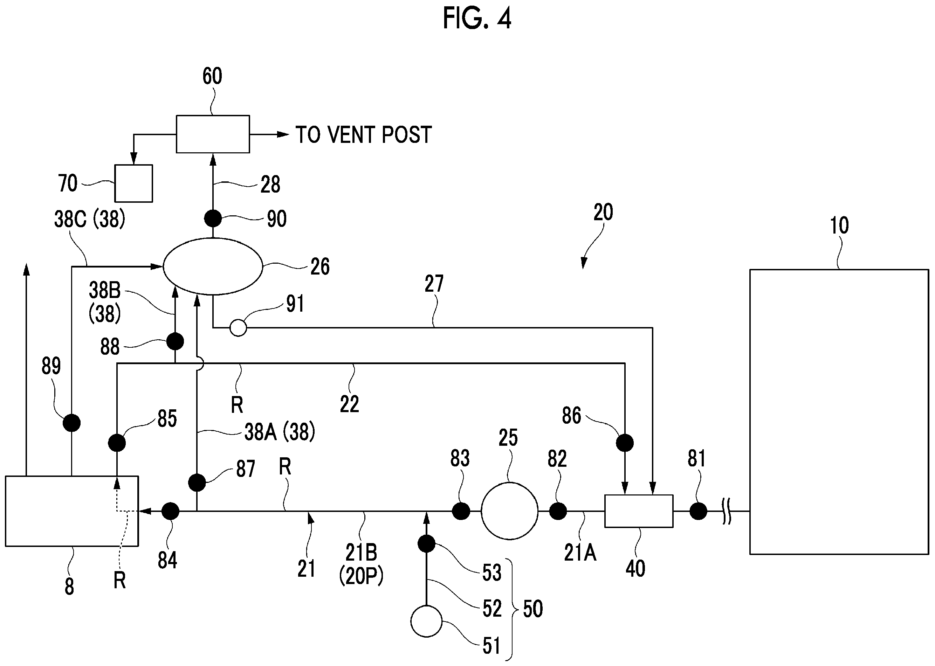

Next, in a case where the combustion device 8 resumes using fuel ammonia, as shown in Fig. 4, first, the opening-closing valve 91 is brought into an open state, and the opening-closing valves 81 to 90 are brought into a closed state. Accordingly, purged fuel ammonia which is stored in the high-pressure storage tank 26 at a high pressure is introduced into the ammonia storing tank 40 via the ammonia filling line 27.

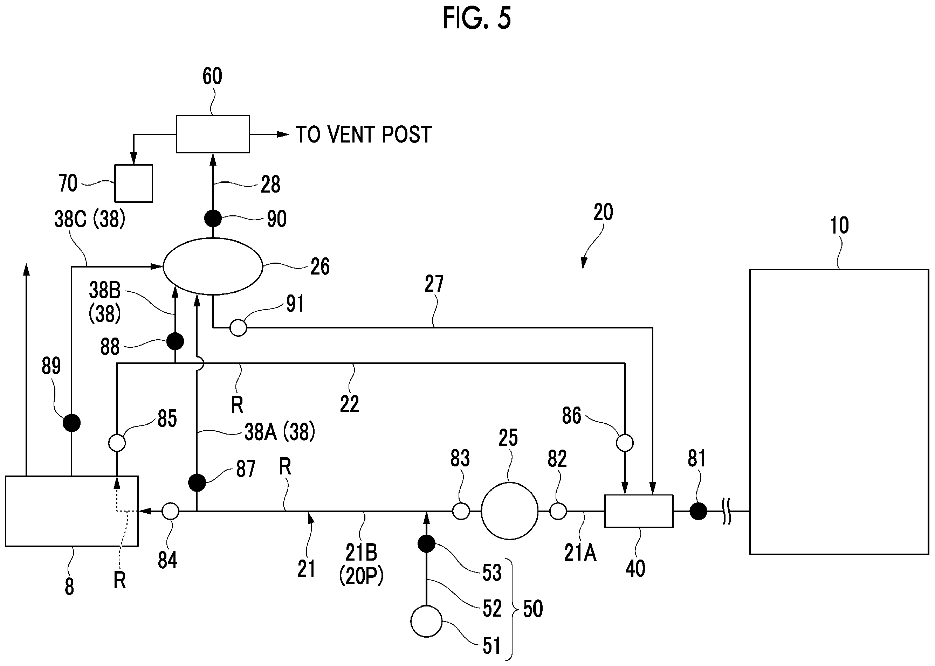

Then, as shown in Fig. 5, when the opening-closing valves 82 to 86 and 91 are brought into an open state and the opening-closing valves 87 to 90 are brought into a closed state to operate the ammonia high-pressure pump 25, fuel ammonia introduced into the ammonia storing tank 40 is supplied to the second supply line 21B via the first supply line 21A and the ammonia high-pressure pump 25. Further, the fuel ammonia supplied to the second supply line 21B reaches each circulation passage R of the combustion device 8 and the ammonia fuel return line 22 and is returned to the ammonia storing tank 40. That is, the fuel ammonia of the ammonia storing tank 40 circulates in an annular flow path formed by the first supply line 21A, the second supply line 21B, the combustion device 8, and the ammonia fuel return line 22.

After then, when the insides of the second supply line 21B, the combustion device 8, and the ammonia fuel return line 22 are in a state sufficiently filled with fuel ammonia, the opening-closing valve 81 is brought into an open state after the opening-closing valve 91 is brought into a closed state from the state of Fig. 5. Accordingly, a state where the combustion device 8 operates using fuel ammonia of the ammonia tank 10 is caused.

Herein, before stop using fuel ammonia, the opening-closing valve 90 is brought into an open state again, and the pressure of the inside of the high-pressure storage tank 26 is reduced. Accordingly, the high-pressure storage tank 26 is in a state where purged fuel ammonia is receivable. Then, in a case where fuel ammonia remains in the high-pressure storage tank 26 by reducing the pressure of the inside of the high-pressure storage tank 26, the fuel ammonia is vaporized and is sent into the ammonia collecting unit 60 together with an inert gas.

### (Effects)

As described above, the watercraft 1 of the first embodiment includes the hull 2, the ammonia tank 10 that is provided at the hull 2 and that stores fuel ammonia in a liquid state, the fuel supply line 21 that is connected to the ammonia tank 10, the combustion device 8 into which the fuel ammonia is introduced from the ammonia tank 10 via the fuel supply line 21, the inert gas supply device that pumps an inert gas to the combustion device 8 via the fuel supply line 21, the high-pressure storage tank 26 into which the fuel ammonia in the combustion device 8 is introduced together with the inert gas pumped to the combustion device 8 and that can store the fuel ammonia in a high-pressure state where the fuel ammonia can maintain a liquid state, and the ammonia filling line 27 through which the fuel ammonia stored in the high-pressure storage tank 26 can be introduced into the fuel supply line 21.

With such a watercraft 1, when purging the circulation passage R of the fuel supply line 21 and the combustion device 8, in which fuel ammonia remains, with an inert gas, the fuel ammonia exhausted through the purging can be stored in a liquid state in the high-pressure storage tank 26. Then, although it is necessary to perform work of replacing the inert gas in the fuel supply line 21 and the combustion device 8 with ammonia in such a watercraft 1 before operating the combustion device 8 again using fuel ammonia, the inert gas can be replaced with ammonia using the fuel ammonia stored in the high-pressure storage tank 26 when performing the work. Therefore, consumption of fuel ammonia stored in the ammonia tank 10 can be suppressed by effectively using the purged ammonia. Further, for example, the amount of ammonia treated in the ammonia collecting unit 60 can be reduced when completely purging the fuel ammonia remaining in the circulation passage R, or the size of the ammonia collecting unit 60 can be decreased.

The watercraft 1 of the first embodiment further includes the ammonia storing tank 40 that is provided at the fuel supply line 21, that can temporarily store fuel ammonia from the ammonia tank 10, that can temporarily store fuel ammonia stored in the high-pressure storage tank 26 via the ammonia filling line 27, and that can send the temporarily stored fuel ammonia into the fuel supply line 21 and the ammonia high-pressure pump 25 that is provided at the fuel supply line 21 on a side close to the combustion device 8 of the ammonia storing tank 40 and that pumps the fuel ammonia stored in the ammonia storing tank 40.

By configuring in this manner, fuel ammonia stored in the high-pressure storage tank 26 can be smoothly returned to the fuel supply line 21. In addition, since the fuel ammonia stored in the high-pressure storage tank 26 is sent into the fuel supply line 21 or the combustion device 8 by the ammonia high-pressure pump 25, an inert gas of the circulation passage R can be smoothly replaced with the fuel ammonia.

The watercraft 1 of the first embodiment further includes the ammonia fuel return line 22 through which surplus fuel ammonia left unused as a fuel by the combustion device 8 is returned to the fuel supply line 21 on a side close to the ammonia tank 10 of the ammonia high-pressure pump 25.

By configuring in this manner, the surplus fuel ammonia left unused as a fuel by the combustion device 8 can be sent into the combustion device 8 again by the ammonia high-pressure pump 25. Further, when fuel ammonia of the high-pressure storage tank 26 is returned to the fuel supply line 21, the fuel ammonia can be circulated in the fuel supply line 21 and the combustion device 8 using the ammonia fuel return line 22. Therefore, it is possible to suppress that the inert gas remains in the fuel supply line 21 and the combustion device 8.

Surplus fuel ammonia left unused as a fuel by the combustion device 8 is further returned to the ammonia storing tank 40 through the ammonia fuel return line 22 in the watercraft 1 of the first embodiment.

Therefore, fuel ammonia sent in from the high-pressure storage tank 26 and the fuel ammonia returned through the ammonia fuel return line 22 can be smoothly merged in the ammonia storing tank 40.

### <<Modification Example of First Embodiment>>

Next, a modification example of the first embodiment of the present disclosure will be described based on the drawings. The modification example is different only in that an inert gas can be directly introduced from the fuel supply line 21 into the ammonia collecting unit 60 and an inert gas can be directly introduced from the ammonia fuel return line 22 into the ammonia collecting unit 60. Therefore, the same portions as those in the first embodiment described above will be assigned with the same reference numerals, and redundant description thereof will be omitted.

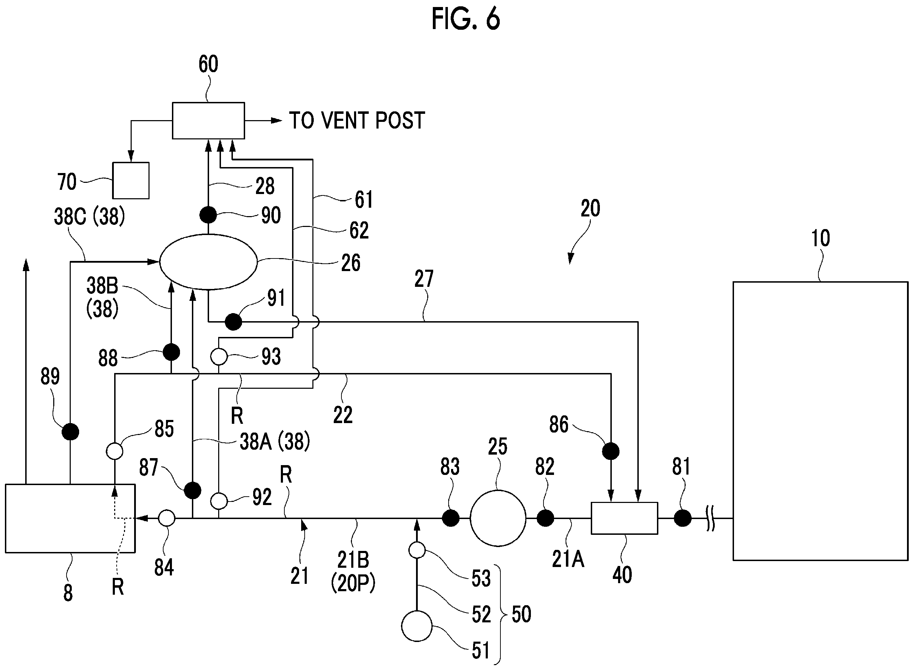

Fig. 6 is a view showing a pipe system according to the modification example of the first embodiment of the present disclosure and shows a state when purging an inert gas containing a small amount of remaining fuel ammonia.

As shown in Fig. 6, the pipe system 20 in the modification example of the first embodiment includes a first purge gas exhaust line 61, a second purge gas exhaust line 62, and opening-closing valves 92 and 93 in addition to the configurations of the first embodiment described above.

The first purge gas exhaust line 61 connects the fuel supply line 21 and the ammonia collecting unit 60 to each other. More specifically, the first purge gas exhaust line 61 connects the second supply line 21B of the fuel supply line 21 and the ammonia collecting unit 60 to each other. The first purge gas exhaust line 61 is provided with the opening-closing valve 92.

The second purge gas exhaust line 62 connects the ammonia fuel return line 22 and the ammonia collecting unit 60 to each other. The second purge gas exhaust line 62 is provided with the opening-closing valve 93.

The opening-closing valves 92 and 93 are brought into a closed state in normal times and when fuel ammonia remaining in the circulation passage R is guided to the high-pressure storage tank 26 via the vent line 38.

Fuel ammonia that is initially pushed by an inert gas in a pressurized state and that remains in the circulation passage R flows into the high-pressure storage tank 26 in the purging treatment of the first embodiment described above, but when the purging treatment continues as it is, also the inert gas starts flowing into the high-pressure storage tank 26. However, in the modification example, before the inert gas starts flowing into the high-pressure storage tank 26, the opening-closing valves 87 to 89 are brought into the closed state, and the opening-closing valves 92 and 93 are brought into an open state. More specifically, the opening-closing valves 84, 85, 92, and 93 and the inert gas supply valve 53 are brought into the open state and the opening-closing valves 81, 82, 83, 86, 87, 88, 89, 90, and 91 are brought into the closed state to continue an operation of the inert gas supply unit 51.

By doing so as in the modification example, a small amount of fuel ammonia and a small amount of inert gas which remain in the circulation passage R are pushed by a new inert gas in a pressurized state, which is supplied from the inert gas supply unit 51, and are treated by being directly introduced into the ammonia collecting unit 60 via the first purge gas exhaust line 61 and the second purge gas exhaust line 62, not via the high-pressure storage tank 26. Then, after a state where the fuel ammonia does not remain in the circulation passage R is caused, the inert gas supply valve 53 is brought into a closed state, and then all of the opening-closing valves 81 to 93 are brought into the closed state.

By configuring as in the modification example, it is suppressed that an inert gas is introduced into the high-pressure storage tank 26, and an inert gas containing a small amount of remaining fuel ammonia can be directly introduced into the ammonia collecting unit 60, in addition to the effects of the first embodiment described above. For this reason, an increase in the size of the high-pressure storage tank 26 can be suppressed without fuel ammonia remaining in the circulation passage R. In addition, since the first purge gas exhaust line 61 causes the second supply line 21B of the fuel supply line 21 and the ammonia collecting unit 60 to communicate with each other, the second purge gas exhaust line 62 causes the ammonia fuel return line 22 and the ammonia collecting unit 60 to communicate with each other, and each of the second supply line 21B and the ammonia fuel return line 22 can be in a low-pressure inert gas atmosphere, maintenance or the like can also be quickly performed.

### <Second Embodiment>

Hereinafter, a watercraft according to a second embodiment of the present disclosure will be described with reference to the drawings. The second embodiment is different from the first embodiment described above only in terms of a configuration of an ammonia filling line. For this reason, Fig. 1 will be incorporated, portions which are the same as those in the first embodiment will be assigned with the same reference numerals, and redundant description thereof will be omitted.

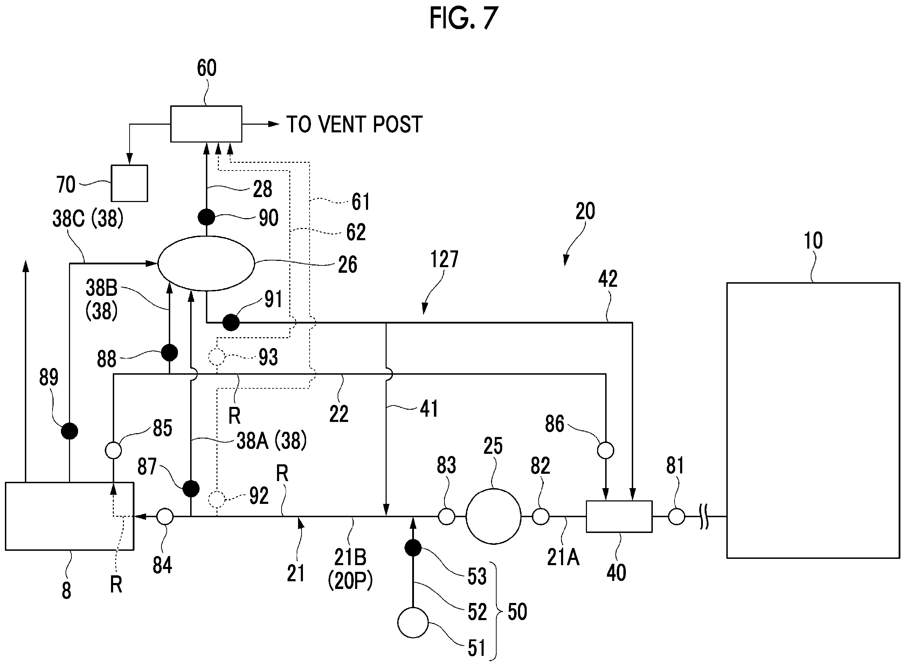

Fig. 7 is a view showing a pipe system according to the second embodiment of the present disclosure.

As shown in Figs. 1 and 7, the watercraft 1 of the second embodiment includes the hull 2, the superstructure 4, the combustion device 8, the ammonia tank 10, the pipe system 20, the vent post 30, the ammonia collecting unit 60, the collected ammonia water tank 70, the fuel supply line 21, the ammonia high-pressure pump 25, the ammonia fuel return line 22, the inert gas supply device 50, the vent line 38, the high-pressure storage tank 26, an ammonia filling line 127, and the ammonia storing tank 40.

Fuel ammonia stored in the high-pressure storage tank 26 is introduced into the fuel supply line 21 through the ammonia filling line 127. The ammonia filling line 127 includes a first filling line 41 and a second filling line 42.

The first filling line 41 is configured such that the fuel ammonia stored in the high-pressure storage tank 26 can be introduced into the second supply line 21B which is the fuel supply line 21 on the side close to the combustion device 8 of the ammonia high-pressure pump 25.

The second filling line 42 is configured such that fuel ammonia stored in the high-pressure storage tank 26 can be introduced into the first supply line 21A which is the fuel supply line 21 on the side close to the ammonia tank 10 of the ammonia high-pressure pump 25. Liquefied ammonia is introduced into the ammonia storing tank 40 provided at the first supply line 21A through the second filling line 42 of the second embodiment, like the ammonia filling line 27 of the first embodiment. Herein, although a case where the first filling line 41 causes the high-pressure storage tank 26 and the second supply line 21B to communicate with each other and the second filling line 42 turns out from the first filling line 41 and causes the first filling line 41 and the ammonia storing tank 40 to communicate with each other has been given as an example in the second embodiment, the invention is not limited to the configuration. For example, the second filling line 42 may be formed to reach the ammonia storing tank 40 from the high-pressure storage tank 26.

Further, like the ammonia filling line 27 of the first embodiment, the ammonia filling line 127 is provided with the opening-closing valve 91 on the side close to the high-pressure storage tank 26. The opening-closing valve 91 is brought into an open state when introducing fuel ammonia from the high-pressure storage tank 26 into the fuel supply line 21 and is brought into a closed state in the other cases.

In the second embodiment, a pressure in the high-pressure storage tank 26 is higher than a pressure in the second supply line 21B, and liquid ammonia in a liquid phase of the high-pressure storage tank 26 can be introduced into the second supply line 21B and the ammonia storing tank 40 through the ammonia filling line 127, using the pressure in the high-pressure storage tank 26. The pressure of the high-pressure storage tank 26 may be higher than the pressure in the second supply line 21B when liquid ammonia is introduced into the fuel supply line 21 via the ammonia filling line 127. For example, the pressure in the second supply line 21B may be released only when the liquid ammonia is introduced into the fuel supply line 21 via the ammonia filling line 127.

### (Effects)

In the second embodiment, in a case where the high-pressure storage tank 26 is disposed at a position closer to the combustion device 8 than the ammonia high-pressure pump 25 is, liquid ammonia can be introduced into the second supply line 21B routed to a position closer to the combustion device 8. Therefore, liquid ammonia of the high-pressure storage tank 26 can be quickly introduced into the fuel supply line 21 while increasing a degree of freedom in disposing the high-pressure storage tank 26.

### <<Modification Example of Second Embodiment>>

A case where a pressure in the high-pressure storage tank 26 is higher than a pressure in the second supply line 21B has been described in the second embodiment. However, the pressure in the high-pressure storage tank 26 may be equal to or lower than the pressure in the second supply line 21B.

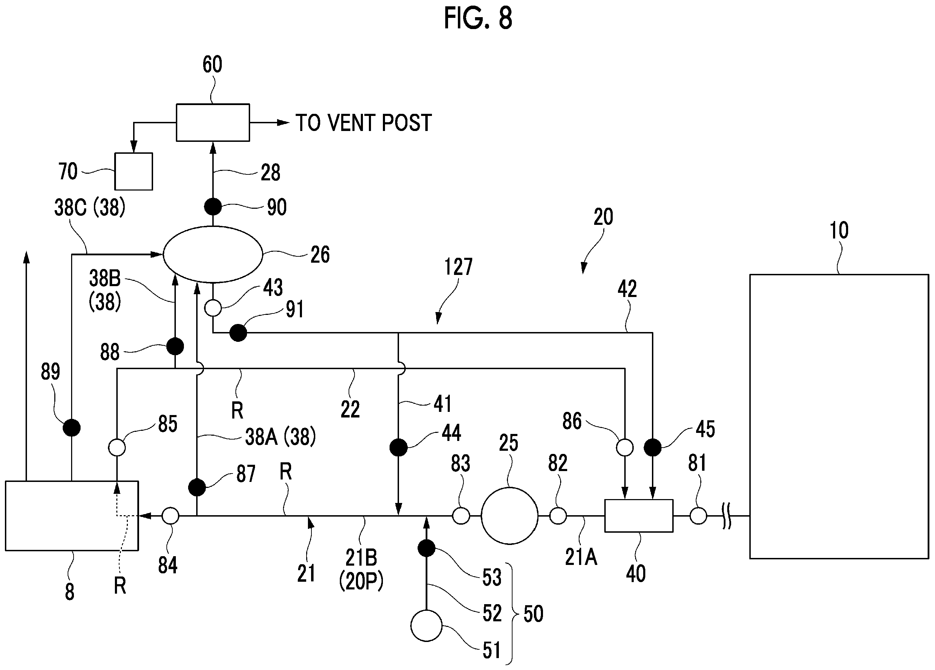

Fig. 8 is a view showing a pipe system according to a modification example of the second embodiment of the present disclosure.

As shown in Fig. 8, the pipe system 20 in the modification example of the second embodiment includes a booster pump 43 and opening-closing valves 44 and 45, in addition to the configurations of the second embodiment described above.

The booster pump 43 is configured to increase the pressure of fuel ammonia of the first filling line 41. The booster pump 43 given as an example in the modification example of the second embodiment is provided at the ammonia filling line 127 between the high-pressure storage tank 26 and the opening-closing valve 91. Liquid ammonia of which the pressure has been increased by the booster pump 43, that is, a pressure in the ammonia filling line 127 on a fuel supply line 21 side of the booster pump 43 is a pressure higher than a pressure in the second supply line 21B which is the fuel supply line 21 on the side close to the combustion device 8 of the ammonia high-pressure pump 25.

The opening-closing valve 44 can open and close a flow path in the first filling line 41, and the opening-closing valve 45 can open and close a flow path in the second filling line 42. An introduction destination for liquid ammonia of the high-pressure storage tank 26 can be switched by the opening-closing valves 44 and 45. The opening-closing valves 44 and 45 are brought into a closed state in normal times and are brought into an open state when the liquid ammonia of the high-pressure storage tank 26 is introduced into the fuel supply line 21. In the modification example of the second embodiment, since the second filling line 42 turns out from the middle of the first filling line 41, the opening-closing valve 44 is provided at the first filling line 41 on a second supply line 21B side of a position where the second filling line 42 turns out. In the modification example of the second embodiment described above, the opening-closing valve 91 may be omitted (the same applies to a third embodiment).

### (Effects)

In the modification example of the second embodiment, even when the pressure of liquid ammonia in the high-pressure storage tank 26 is not higher than a pressure in the second supply line 21B, the liquid ammonia in the high-pressure storage tank 26 can be introduced into the second supply line 21B as the booster pump increases the pressure thereof. Therefore, the high-pressure storage tank 26 having a lower withstand voltage can be used.

### <Third Embodiment>

Next, a watercraft according to the third embodiment of the present disclosure will be described with reference to the drawings. Although any disposition of the high-pressure storage tank 26 can also be included in the first and second embodiments described above, the third embodiment is characterized by disposition of the high-pressure storage tank in a vertical direction. For this reason, Fig. 1 will be incorporated, portions which are the same as those in the first and second embodiments described above will be assigned with the same reference numerals, and redundant description thereof will be omitted.

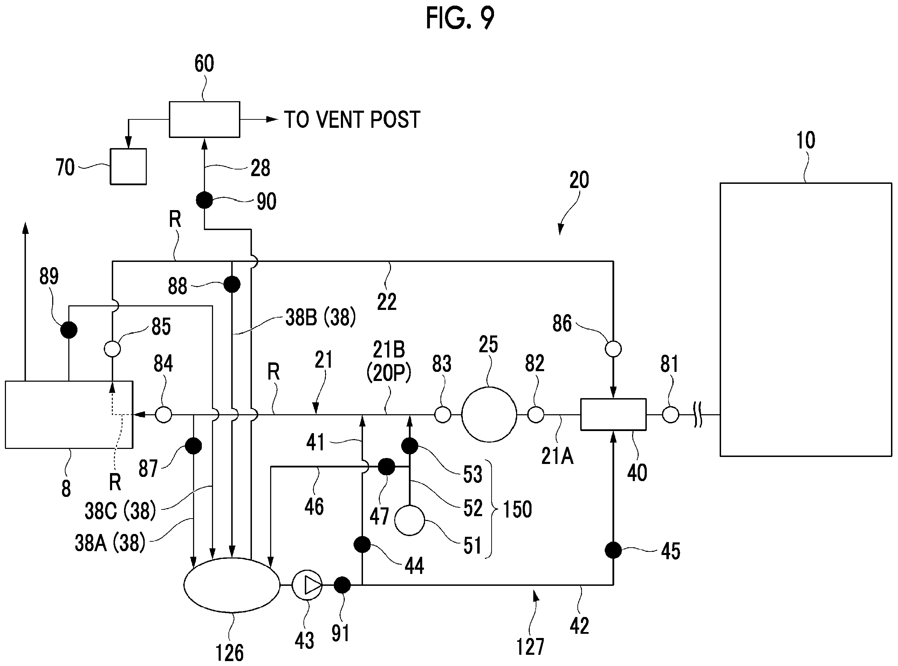

Fig. 9 is a view showing a pipe system according to the third embodiment of the present disclosure.

As shown in Figs. 1 and 9, the watercraft 1 of the third embodiment includes the hull 2, the superstructure 4, the combustion device 8, the ammonia tank 10, the pipe system 20, the vent post 30, the ammonia collecting unit 60, the collected ammonia water tank 70, the fuel supply line 21, the ammonia high-pressure pump 25, the ammonia fuel return line 22, an inert gas supply device 150, the vent line 38, a high-pressure storage tank 126, the ammonia filling line 127, and the ammonia storing tank 40.

The inert gas supply device 150 performs so-called purging that is replacing fuel ammonia of the circulation passage R, in which fuel ammonia which is a fuel of the combustion device 8 circulates, with an inert gas such as nitrogen. Like the inert gas supply device 50 of the first and second embodiments, the inert gas supply device 150 includes the inert gas supply unit 51, the inert gas supply line 52, and the inert gas supply valve 53. The inert gas supply device 150 of the third embodiment further includes an inert gas supply line 46 for performing purging of the high-pressure storage tank 126 and an inert gas supply valve 47. The inert gas supply line 46 connects the inert gas supply unit 51 and the high-pressure storage tank 126 to each other. The inert gas supply valve 47 is provided at the inert gas supply line 46 and is brought into an open state from a closed state when the inert gas is supplied from the inert gas supply unit 51 to the high-pressure storage tank 126.

Like the high-pressure storage tank 26 of the first and second embodiments, the high-pressure storage tank 126 is configured to store an inert gas and fuel ammonia in a high-pressure state. The fuel ammonia is introduced into the high-pressure storage tank 126 together with the inert gas via the vent line 38. A state where a gas phase containing an inert gas and a liquid phase of fuel ammonia are present is caused in the high-pressure storage tank 126. The liquid phase in the high-pressure storage tank 126 communicates with the ammonia filling line 127, and the gas phase in the high-pressure storage tank 126 communicates with the gas exhaust line 28 through which a gas is sent into the ammonia collecting unit 60.

The high-pressure storage tank 126 is provided below the fuel supply line 21 and the ammonia fuel return line 22 in the vertical direction. More specifically, the high-pressure storage tank 126 is disposed, in the vertical direction, below any lowermost portion of a lowermost portion of the fuel supply line 21 which is positioned on a lowermost side and a lowermost portion of the ammonia fuel return line 22 which is positioned on the lowermost side. In other words, a liquid phase of the high-pressure storage tank 126 is disposed below the fuel supply line 21 and the ammonia fuel return line 22 such that each of liquid ammonia in the fuel supply line 21 and liquid ammonia in the ammonia fuel return line 22 is movable to the high-pressure storage tank 126 by gravity. In the third embodiment, the vent line 38 may be connected to the lowermost portion of the fuel supply line 21 or the lowermost portion of the ammonia fuel return line 22.

### (Effects)

In the third embodiment, in addition to the effects of the first and second embodiments described above, liquid ammonia remaining in a lower portion of each pipe without being exhausted from the fuel supply line 21 and the ammonia fuel return line 22 even when supply of an inert gas is performed by the inert gas supply device 150 can be guided to the high-pressure storage tank 126 due to a weight thereof. Therefore, the liquid ammonia of the fuel supply line 21 and the ammonia fuel return line 22 can be more efficiently collected.

### <Other Embodiment>

Although the embodiments of the present disclosure have been described in detail with reference to the drawings hereinbefore, a specific configuration is not limited to the embodiments, and design changes or the like are also included without departing from the gist of the present disclosure.

A case where the combustion device 8 is the main engine which uses ammonia as a fuel has been described in the embodiments. However, the combustion device 8 is not limited to a device that combusts only ammonia and may be, for example, the combustion device 8 that can switch between ammonia and a fuel other than ammonia (for example, a heavy oil or the like).

Although a valve used in the pipe system is written as an opening-closing valve in the embodiments, the valve does not mean only a valve that can hold a full open or fully closed position and is written as a valve including a valve that can hold an intermediate opening degree.

A case of including the ammonia collecting unit 60 and the collected ammonia water tank 70 has been described in the embodiments. However, an ammonia treatment device that detoxifies ammonia through combustion or the like may be included instead of the ammonia collecting unit 60 and the collected ammonia water tank 70.

A case of including the collected ammonia water tank 70 has been described in the embodiments. However, the collected ammonia water tank 70 may be omitted. In this case, collected ammonia water that is collected by the ammonia collecting unit 60 may be stored or for example, neutralized and diluted to be released to the outside of the watercraft.

A case where the fuel supply line 21 is provided with the ammonia storing tank 40 has been described in the embodiments. However, insofar as a configuration where fuel ammonia from the ammonia filling line 27 or the ammonia fuel return line 22 is merged with the fuel supply line 21 and can be temporarily stored is adopted, the invention is not limited to the ammonia storing tank 40. For example, instead of the ammonia storing tank 40, a pipe of the fuel supply line 21 at a location where the ammonia filling line 27 or the ammonia fuel return line 22 is merged and connected may be a pipe thicker than other pipes of the fuel supply line 21.

In addition, a case where fuel ammonia in the high-pressure storage tank 26 is returned to the fuel supply line 21 using a pressure inside the high-pressure storage tank 26 has been described in the first embodiment. However, without being limited to the configuration, for example, the fuel ammonia in the high-pressure storage tank 26 may be returned to the fuel supply line 21 by providing the ammonia filling line 27 with a pump.

Further, although a case where both of the first filling line 41 and the second filling line 42 are provided in the second and third embodiments has been given as an example, the second filling line 42 may be provided as necessary or for example, may be omitted.

In addition, in the second and third embodiments, as in the modification example of the first embodiment, the first purge gas exhaust line 61, the second purge gas exhaust line 62, and the opening-closing valves 92 and 93 may be provided as shown by broken lines in Fig. 7.

Further, disposition of the high-pressure storage tank 126 is not limited to the disposition given as an example in the third embodiment. For example, a position where the high-pressure storage tank 126 is provided in the vertical direction may be below a lowermost portion of the purging target region 20p of the fuel supply line 21 and a lowermost portion of the purging target region 20p of the ammonia fuel return line 22 in a section (not shown) where the high-pressure storage tank 126 is provided. For example, in a case where the high-pressure storage tank 126, the fuel supply line 21, and the ammonia fuel return line 22 are provided in the same section (not shown), the high-pressure storage tank 126 may be disposed below any lowermost portion of the lowermost portion of the fuel supply line 21 which is positioned lowermost and the lowermost portion of the ammonia fuel return line 22 which is positioned lowermost in the vertical direction in the section.

A case where the opening-closing valve 84 is disposed on a downstream side of the fuel supply line 21 with respect to a position where the first vent line 38A turns out and the opening-closing valve 85 is disposed on an upstream side of the ammonia fuel return line 22 with respect to a position where the second vent line 38B turns out has been given as an example in each of the embodiments and the modification examples. However, disposition of the opening-closing valves 84 and 85 is not limited to the disposition. For example, the opening-closing valve 84 may be disposed on an upstream side of the fuel supply line 21 with respect to the position where the first vent line 38A turns out, or the opening-closing valve 85 may be disposed on a downstream side of the ammonia fuel return line 22 with respect to the position where the second vent line 38B turns out.

Further, the invention is not limited to a configuration where an opening-closing valve is provided on any one of the upstream side with respect to a position where the vent line 38 turns out and the downstream side with respect to the position where the vent line 38 turns out. For example, opening-closing valves may be provided on both of the upstream side of the fuel supply line 21 with respect to the position where the first vent line 38A turns out and the downstream side of the fuel supply line 21 with respect to the position where the first vent line 38A turns out, or opening-closing valves may be provided on both of the upstream side with respect to the position where the second vent line 38B turns out and the downstream side with respect to the position where the second vent line 38B turns out.

In addition, a case where the opening-closing valve 84 is disposed on the downstream side of the fuel supply line 21 with respect to a position where the first purge gas exhaust line 61 turns out and the opening-closing valve 85 is disposed on an upstream side of the ammonia fuel return line 22 with respect to a position where the second purge gas exhaust line 62 turns out has been given as an example in each of the embodiments and the modification examples. However, the invention is not limited to the disposition. The opening-closing valve 84 may be disposed on the upstream side of the fuel supply line 21 with respect to the position where the first purge gas exhaust line 61 turns out, or the opening-closing valve 85 may be disposed on a downstream side of the ammonia fuel return line 22 with respect to the second purge gas exhaust line 62. In addition, the invention is not limited to a case where the opening-closing valve 84 is disposed on only any one of the upstream side and the downstream side with respect to the position where the first purge gas exhaust line 61 turns out. Similarly, the invention is not limited to a case where the opening-closing valve 85 is disposed on only any one of the upstream side and the downstream side with respect to the position where the second purge gas exhaust line 62 turns out. For example, opening-closing valves may be provided on both of the upstream side and the downstream side with respect to the position where the first purge gas exhaust line 61 turns out, or opening-closing valves may be provided on both of the upstream side and the downstream side with respect to the position where the second purge gas exhaust line 62 turns out.

Further, a case where the position where the first vent line 38A turns out is on the downstream side of the fuel supply line 21 with respect to the position where the first purge gas exhaust line 61 turns out and the position where the second vent line 38B turns out is on the upstream side of the ammonia fuel return line 22 with respect to the position where the second purge gas exhaust line 62 turns out has been given as an example in each of the embodiments and the modification examples. However, the invention is not limited to the configurations. For example, a positional relationship between the first vent line 38A and the first purge gas exhaust line 61 may be changed so that the position where the first vent line 38A turns out is on the upstream side of the fuel supply line 21 with respect to the position where the first purge gas exhaust line 61 turns out, or a positional relationship between the second vent line 38B and the second purge gas exhaust line 62 may be changed so that the position where the second vent line 38B turns out is disposed on the downstream side of the ammonia fuel return line 22 with respect to the position where the second purge gas exhaust line 62 turns out.

### <Appendix>

The watercraft 1 described in the embodiments is understood, for example, as follows.

(1) The watercraft 1 according to a first aspect includes the hull 2, the ammonia tank 10 that is provided at the hull 2 and that stores fuel ammonia in a liquid state, the fuel supply line 21 that is connected to the ammonia tank 10, the combustion device 8 into which the fuel ammonia is introduced from the ammonia tank 10 via the fuel supply line 21, the inert gas supply device that pumps an inert gas to at least the combustion device 8 via the fuel supply line 21, the high-pressure storage tank 26 into which the fuel ammonia in the combustion device 8 is introduced together with the inert gas pumped to the combustion device 8 and that can store the fuel ammonia in a high-pressure state where the fuel ammonia can maintain a liquid state, and the ammonia filling line 27 through which the fuel ammonia stored in the high-pressure storage tank 26 can be introduced into the fuel supply line 21.

Examples of the combustion device 8 include an internal combustion engine and a boiler used in a main engine and a generator respectively.

Accordingly, when purging the circulation passage of each of the fuel supply line 21 and the combustion device 8 in which fuel ammonia remains with an inert gas, the fuel ammonia exhausted through the purging can be stored in a liquid state in the high-pressure storage tank 26. Then, although it is necessary to perform work of replacing the inert gas in the fuel supply line 21 and the combustion device 8 with ammonia in such a watercraft 1 before operating the combustion device 8 again using fuel ammonia, the inert gas can be replaced with ammonia using the fuel ammonia stored in the high-pressure storage tank 26 when performing the work. Therefore, consumption of fuel ammonia stored in the ammonia tank 10 can be suppressed by effectively using the purged ammonia. Further, for example, the amount of ammonia treated in the ammonia collecting unit 60 can be reduced when completely purging the fuel ammonia remaining in the circulation passage R, or the size of the ammonia collecting unit 60 can be decreased.

(2) The watercraft 1 according to a second aspect, which is the watercraft 1 of (1), includes the ammonia storing tank 40 that is provided at the fuel supply line 21, that can temporarily store fuel ammonia from the ammonia tank 10, that can temporarily store the fuel ammonia stored in the high-pressure storage tank 26 via the ammonia filling line 27, and that can send the temporarily stored fuel ammonia into the fuel supply line 21 and the ammonia high-pressure pump 25 that is provided at the fuel supply line 21 on the side close to the combustion device 8 of the ammonia storing tank 40 and that pumps the fuel ammonia stored in the ammonia storing tank 40.

Accordingly, the fuel ammonia stored in the high-pressure storage tank 26 can be smoothly returned to the fuel supply line 21. In addition, since the fuel ammonia stored in the high-pressure storage tank 26 is sent into the fuel supply line 21 or the combustion device 8 by the ammonia high-pressure pump 25, an inert gas can be smoothly replaced with the fuel ammonia.

(3) The watercraft 1 according to a third aspect, which is the watercraft 1 of (2), further includes the ammonia fuel return line 22 through which surplus fuel ammonia left unused as a fuel by the combustion device 8 is returned to the fuel supply line 21 on the side close to the ammonia tank 10 of the ammonia high-pressure pump 25.

Accordingly, the surplus fuel ammonia left unused as a fuel by the combustion device 8 can be sent into the combustion device 8 again by the ammonia high-pressure pump 25. Further, when fuel ammonia of the high-pressure storage tank 26 is returned to the fuel supply line 21, the fuel ammonia can be circulated in the fuel supply line 21 and the combustion device 8 using the ammonia fuel return line 22. Therefore, it is possible to suppress that the inert gas remains in the fuel supply line 21 and the combustion device 8.

(4) In the watercraft 1 according to a fourth aspect, which is the watercraft 1 of (3), the surplus fuel ammonia left unused as a fuel by the combustion device 8 is returned to the ammonia storing tank 40 through the ammonia fuel return line 22.

Accordingly, fuel ammonia sent in from the high-pressure storage tank 26 and the fuel ammonia returned through the ammonia fuel return line 22 can be smoothly merged in the ammonia storing tank 40.

(5) The watercraft 1 according to a fifth aspect, which is the watercraft 1 of (3) or (4), includes the ammonia collecting unit 60 that can collect the fuel ammonia and the gas exhaust line 28 that connects the high-pressure storage tank 26 and the ammonia collecting unit 60 to each other.

Accordingly, when reducing a pressure inside the high-pressure storage tank 26, ammonia can be collected by introducing a gas phase in the high-pressure storage tank 26 into the ammonia collecting unit 60.

(6) The watercraft 1 according to a sixth aspect, which is the watercraft 1 of (5), includes the first purge gas exhaust line 61 that connects the fuel supply line 21 and the ammonia collecting unit 60 to each other and the second purge gas exhaust line 62 that connects the ammonia fuel return line 22 and the ammonia collecting unit 60 to each other.

Accordingly, since an inert gas can be directly introduced into the ammonia collecting unit 60 without being introduced into the high-pressure storage tank 26, an increase in the size of the high-pressure storage tank 26 can be suppressed. In addition, since the first purge gas exhaust line 61 causes the second supply line 21B and the ammonia collecting unit 60 to communicate with each other, the second purge gas exhaust line 62 causes the ammonia fuel return line 22 and the ammonia collecting unit 60 to communicate with each other, and each of the second supply line 21B and the ammonia fuel return line 22 can be in a low-pressure inert gas atmosphere, maintenance or the like can be quickly performed.

(7) The watercraft 1 according to a seventh aspect, which is the watercraft 1 of (1), includes the ammonia high-pressure pump 25 that is provided at the fuel supply line 21 and that pumps the fuel ammonia toward the combustion device 8, and the ammonia filling line 127 includes at least the first filling line 41 through which the fuel ammonia stored in the high-pressure storage tanks 26 and 126 can be introduced into the fuel supply line 21 on the side close to the combustion device 8 of the ammonia high-pressure pump 25, of the first filling line 41 and the second filling line 42 through which the fuel ammonia stored in the high-pressure storage tanks 26 and 126 is introduced into the fuel supply line 21 on the side close to the ammonia tank 10 of the ammonia high-pressure pump 25.

Accordingly, liquid ammonia of the high-pressure storage tank 26 can be quickly introduced into the fuel supply line 21 while increasing a degree of freedom in disposing the high-pressure storage tank 26.

(8) The watercraft 1 according to an eighth aspect, which is the watercraft 1 of (7), includes the booster pump 43 that can increase at least the pressure of the fuel ammonia of the first filling line 41.

Accordingly, the high-pressure storage tank 26 having a lower withstand voltage can be used.

(9) The watercraft 1 according to a ninth aspect, which is the watercraft 1 of (7) or (8), includes the ammonia storing tank 40 that is provided at the fuel supply line 21, that can temporarily store fuel ammonia from the ammonia tank 10, and that can send the temporarily stored fuel ammonia into the fuel supply line 21, and the fuel ammonia stored in the high-pressure storage tanks 26 and 126 is introduced into the ammonia storing tank 40 through the second filling line 42.

Accordingly, the fuel ammonia sent in from the high-pressure storage tanks 26 and 126 and fuel ammonia returned through the ammonia fuel return line 22 can be smoothly merged in the ammonia storing tank 40.

(10) The watercraft 1 according to a tenth aspect, which is the watercraft 1 of any one of (7) to (9), includes the ammonia collecting unit 60 that can collect the fuel ammonia and the gas exhaust line 28 that connects the high-pressure storage tanks 26 and 126 and the ammonia collecting unit 60 to each other.

Accordingly, when reducing a pressure inside the high-pressure storage tank 26, ammonia can be collected by introducing a gas phase in the high-pressure storage tank 26 into the ammonia collecting unit 60.

(11) The watercraft 1 according to an eleventh aspect, which is the watercraft 1 of (10), includes the first purge gas exhaust line 61 that connects the fuel supply line 21 and the ammonia collecting unit 60 to each other.

Accordingly, maintenance or the like can be quickly performed.

(12) The watercraft 1 according to a twelfth aspect, which is the watercraft 1 of (10) or (11), includes the ammonia fuel return line 22 through which surplus fuel ammonia left unused as a fuel by the combustion device 8 is returned to the fuel supply line 21 on the side close to the ammonia tank 10 of the ammonia high-pressure pump 25 and the second purge gas exhaust line 62 that connects the ammonia fuel return line 22 and the ammonia collecting unit 60 to each other.

Accordingly, maintenance or the like can be quickly performed.

(13) The watercraft 1 according to a thirteenth aspect, which is the watercraft 1 of any one of (7) to (12), in which the high-pressure storage tank 126 is provided at least below the fuel supply line 21.

Accordingly, liquid ammonia of the fuel supply line 21 can be more efficiently collected.

### Industrial Applicability

With the aspects, fuel consumption can be suppressed by effectively using purged ammonia.

### Reference Signs List

1: watercraft
2: hull
4: superstructure
5A, 5B: broadside
6: bottom
7: upper deck
8: combustion device
10: ammonia tank
20: pipe system
20p: purging target region
21: fuel supply line
21A: first supply line
21B: second supply line
22: ammonia fuel return line
25: ammonia high-pressure pump
26, 126: high-pressure storage tank
27, 127: ammonia filling line
28: gas exhaust line
30: vent post
38: vent line
38A: first vent line
38B: second vent line
38C: third vent line
40: ammonia storing tank
41: first filling line
42: second filling line
43: booster pump
44, 45: opening-closing valve
46: inert gas supply line
47: inert gas supply valve
50, 150: inert gas supply device
51: inert gas supply unit
52: inert gas supply line
53: inert gas supply valve
60: ammonia collecting unit
61: first purge gas exhaust line
62: second purge gas exhaust line
70: collected ammonia water tank
81 to 93: opening-closing valve
R: circulation passage

## Claims

1. A watercraft comprising:
a hull;
an ammonia tank that is provided at the hull and that stores fuel ammonia in a liquid state;
a fuel supply line that is connected to the ammonia tank;
a combustion device into which the fuel ammonia is introduced from the ammonia tank via the fuel supply line;
an inert gas supply device that pumps an inert gas to at least the combustion device via the fuel supply line;
a high-pressure storage tank into which the fuel ammonia in the combustion device is introduced together with the inert gas pumped to the combustion device and that is capable of storing the fuel ammonia in a high-pressure state where the fuel ammonia is capable of maintaining the liquid state; and
an ammonia filling line through which the fuel ammonia stored in the high-pressure storage tank is capable of being introduced into the fuel supply line.

2. The watercraft according to Claim 1, further comprising:
an ammonia storing tank that is provided at the fuel supply line, that is capable of temporarily storing the fuel ammonia from the ammonia tank, that is capable of temporarily storing the fuel ammonia stored in the high-pressure storage tank via the ammonia filling line, and that is capable of sending the temporarily stored fuel ammonia into the fuel supply line; and
an ammonia high-pressure pump that is provided at the fuel supply line on a side close to the combustion device of the ammonia storing tank and that pumps the fuel ammonia stored in the ammonia storing tank.

3. The watercraft according to Claim 2, further comprising:
an ammonia fuel return line through which surplus fuel ammonia left unused as a fuel by the combustion device is returned to the fuel supply line on a side close to the ammonia tank of the ammonia high-pressure pump.

4. The watercraft according to Claim 3,
wherein the surplus fuel ammonia left unused as the fuel by the combustion device is returned to the ammonia storing tank through the ammonia fuel return line.

5. The watercraft according to Claim 3 or 4, further comprising:
an ammonia collecting unit that is capable of collecting the fuel ammonia; and
a gas exhaust line that connects the high-pressure storage tank and the ammonia collecting unit to each other.

6. The watercraft according to Claim 5, further comprising:
a first purge gas exhaust line that connects the fuel supply line and the ammonia collecting unit to each other; and
a second purge gas exhaust line that connects the ammonia fuel return line and the ammonia collecting unit to each other.

7. The watercraft according to Claim 1, further comprising:
an ammonia high-pressure pump that is provided at the fuel supply line and that pumps the fuel ammonia toward the combustion device,
wherein the ammonia filling line includes at least a first filling line through which the fuel ammonia stored in the high-pressure storage tank is capable of being introduced into the fuel supply line on a side close to the combustion device of the ammonia high-pressure pump, of the first filling line and a second filling line through which the fuel ammonia stored in the high-pressure storage tank is capable of being introduced into the fuel supply line on a side close to the ammonia tank of the ammonia high-pressure pump.

8. The watercraft according to Claim 7, further comprising:
a booster pump that is capable of increasing at least a pressure of the fuel ammonia of the first filling line.

9. The watercraft according to Claim 7 or 8, further comprising:
an ammonia storing tank that is provided at the fuel supply line, that is capable of temporarily storing the fuel ammonia from the ammonia tank, and that is capable of sending the temporarily stored fuel ammonia into the fuel supply line,
wherein the fuel ammonia stored in the high-pressure storage tank is introduced into the ammonia storing tank through the second filling line.

10. The watercraft according to any one of Claims 7 to 9, further comprising:
an ammonia collecting unit that is capable of collecting the fuel ammonia; and
a gas exhaust line that connects the high-pressure storage tank and the ammonia collecting unit to each other.

11. The watercraft according to Claim 10, further comprising:
a first purge gas exhaust line that connects the fuel supply line and the ammonia collecting unit to each other.

12. The watercraft according to Claim 10 or 11, further comprising:
an ammonia fuel return line through which surplus fuel ammonia left unused as a fuel by the combustion device is returned to the fuel supply line on the side close to the ammonia tank of the ammonia high-pressure pump; and
a second purge gas exhaust line that connects the ammonia fuel return line and the ammonia collecting unit to each other.

13. The watercraft according to any one of Claims 7 to 12,
wherein the high-pressure storage tank is provided at least below the fuel supply line.
